# EUROPÄISCHE PATENTSCHRIFT

(11) **EP 1 320 687 B1**
(45) Veröffentlichungstag und Bekanntmachung des Hinweises auf die Patenterteilung: **23.11.2005**
(21) Anmeldenummer: 01964718.9
(22) Anmeldetag: 12.09.2001
(51) Int. Cl.: F16C 7/02

(54) **GESINTERTE PLEUELSTANGE FÜR EINE VERBRENNUNGSKRAFTMASCHINE**
SINTERED CONNECTING ROD FOR AN INTERNAL COMBUSTION ENGINE
BIELLE FRITTEE POUR UN MOTEUR A COMBUSTION INTERNE

(30) Priorität: 26.09.2000 AT 16202000
(43) Veröffentlichungstag der Anmeldung: 25.06.2003
(73) Patentinhaber: Miba Sintermetall Aktiengesellschaft, 4663 Laakirchen (AT)
(72) Erfinder: RATZI, Raimund, A-4600 Wels (AT)
(74) Vertreter: Hübscher, Helmut
(86) Internationale Anmeldenummer: PCT/AT2001/000285
(87) Internationale Veröffentlichungsnummer: WO 2002/027200

(56) Entgegenhaltungen:
- DE-A- 2 807 298
- DE-A- 3 249 581
- FR-A- 1 390 186
- US-A- 3 559 503
- US-A- 5 193 413
- US-A- 5 524 507
- US-A- 5 617 820

## Beschreibung

### Technisches Gebiet

Die Erfindung bezieht sich auf eine gesinterte Pleuelstange für eine Verbrennungskraftmaschine mit einem Pleuelstangenauge zur Aufnahme eines Kolbenbolzens, mit einem Pleuelstangenkopf zur Kurbelzapfenlagerung und mit einem Schaft aus zwei divergierenden, gegebenenfalls durch einen Verbindungssteg versteiften Längsstegen, deren einander zugekehrte Stegflanken im Bereich des Pleuelstangenkopfes durch eine mittige, konkave Rundung verbunden sind.

### Stand der Technik

Um sinterbedingte Vorteile einerseits hinsichtlich der Einhaltung von Gewichtstoleranzen und anderseits bezüglich der einfacheren Fertigung ausnützen zu können, wurde bereits vorgeschlagen, Pleuelstangen für Verbrennungskraftmaschinen durch ein Sintern warmgepreßter Pulverrohlinge herzustellen. Die Schäfte dieser Pleuelstangen werden durch zwei gegebenenfalls durch einen Verbindungssteg versteifte Längsstege gebildet, die vom Pleuelstangenauge zum Pleuelstangenkopf hin divergieren. Diese Ausführungsform der Pleuelstangen konnten den statischen und dynamischen Festigkeitsanforderungen insbesondere bei Fahrzeugmotoren trotz der im Vergleich zu Schmiedepleueln geringeren Festigkeit der gesinterten Pleuelstangen genügen. Solche gesinterte Pleuelstangen sind jedoch wegen der größeren Schaftbreite im Übergangsbereich zum Pleuelstangenkopf kaum für den Einsatz bei kurzhubigen Verbrennungskraftmaschinen geeignet, weil die größere Schaftbreite im Übergangsbereich zum Pleuelstangenkopf den möglichen Schwenkwinkel der Pleuelstange wesentlich einengt, die den Zylinder nicht berühren darf. Versuche, die Schaftbreite im Übergangsbereich zum Pleuelstangenkopf durch parallele Stege und kleinere Übergangsradien an den Außenflanken der Längsstege zu verringern, haben zu einer unzulässigen Verringerung der Dauerbruchsicherheiten geführt, insbesondere im Bereich der Ölbohrungen, die unmittelbar neben den Schäften in den Pleuelstangenköpfen vorgesehen werden, um den Zylindern und Kolben über die Kurbelwelle Öl zu Schmier und Kühlzwecken zuzuführen.

### Darstellung der Erfindung

Der Erfindung liegt somit die Aufgabe zugrunde, eine gesinterte Pleuelstange der eingangs geschilderten Art so auszugestalten, daß sie für kurzhubige Verbrennungskraftmaschinen eingesetzt werden kann, ohne eine ausreichende Dauerbruchsicherheit zu gefährden.

Die Erfindung löst die gestellte Aufgabe dadurch, daß die Längsstege des Schaftes mit ihren Innen- und Aüßenseiten vom Pleuelstangenkopf zum Pleuelstangenauge divergieren.

Da sich zufolge dieser Maßnahme die Schaftbreite vom Kolbenstangenauge zum Kolbenstangenkopf hin verringert, können trotz ausreichend großer Übergangsradien zwischen den Schaftaußenflanken und dem Pleuelstangenkopf Pleuelstangenabmessungen sichergestellt werden, die einen unbeschränkten Einsatz bei kurzhubigen Verbrennungskraftmaschinen erlauben, und zwar bei einer ausreichenden Dauerbruchsicherheit. Die gegen das Pleuelstangenauge divergierenden Stege des Schaftes bedingen eine gleichmäßigere Spannungsverteilung im Übergangsbereich zwischen dem Pleuelstangenauge und dem Schaft, was die gleichmäßige Belastung der beiden Längsstege des Schaftes unterstützt und vorteilhafte Voraussetzungen zum Einpressen des Kolbenzapfens in das Pleuelstangenauge schafft. Im Bereich des Pleuelstangenkopfes wird hingegen durch die konvergierenden Längsstege eine Spannungskonzentrierung im Übergangsbereich mit der Wirkung erhalten, daß die umfangsseitig anschließenden Bereiche entlastet werden. Dies kommt dem Spannungszustand im Bereich einer allfälligen Ölbohrung zugute, die ja im Bereich dieser Spannungsentlastungen zu liegen kommt, so daß sich die kritischen Spannungen im Bereich der Ölbohrungen in einer zulässigen Größe bewegen. Mit der erfindungsgemäßen Ausgestaltung der gesinterten Pleuelstangen kann daher das dynamische Festigkeitsverhalten an die auftretenden Belastungen vorteilhaft angepaßt und eine auch in kritischen Bereichen ausreichende Dauerbruchsicherheit gewährleistet werden.

Da die Spannungskonzentration im Übergangsbereich zwischen dem Schaft und dem Pleuelstangenkopf von der Ausbildung der Rundung zwischen den inneren Stegflanken der Längsstege abhängt, kann über diese Rundungsausbildung Einfluß auf das Dauerbruchverhalten genommen werden. So können zu einer weitergehenden Entlastung der an den Schaft anschließenden Umfangsbereiche des Pleuelstangenkopfes die Stegflanken und die mittige Rundung über Anschlußrundungen ineinander übergehen, deren Achsen jeweils auf der Seite des gegenüberliegenden Längssteges außerhalb des Schaftes liegen. Durch diese Maßnahme kann der Radius der mittigen Rundung unabhängig vom Verlauf der Stegflanken verkleinert werden, was zu der angestrebten Spannungskonzentration führt. Die Außerhalb des Schaftes liegenden Achsen der Anschlußrundungen, die einen stetigen Übergang zwischen den Stegflanken und der mittigen Rundung erlauben, sichern ausreichend große Krümmungsradien für die Anschlußrundungen, um für einen vorteilhaften Spannungsverlauf in den Längsstegen des Schaftes zu sorgen. Besonders vorteilhafte Konstruktionsverhältnisse ergeben sich in diesem Zusammenhang, wenn die Krümmungsradien der Anschlußrundungen wenigstens dem zehnfachen, vorzugsweise mindestens dem zwanzigfachen Radius der mittigen Rundung entsprechen. Der Radius der mittigen Rundung soll dabei höchstens 5 mm betragen.

Obwohl der Winkel, unter dem die beiden Längsstege des Schaftes divergieren, von verschiedenen Konstruktionsparametern abhängt, ergeben sich für die meisten Einsatzfälle vorteilhafte Bedingungen, wenn die beiden Längsstege des Schaftes unter einem Mindestwinkel von 2° divergieren.

### Kurze Beschreibung der Zeichnungen

In der Zeichnung ist der Efindungsgegenstand beispielsweise dargestellt. Es zeigen
- Fig. 1: eine erfindungsgemäße gesinterte Pleuelstange für eine Verbrennungskraftmaschine in einer schematischen, zum Teil aufgerissenen Ansicht,
- Fig. 2: diese Pleuelstange in einem Schnitt nach der Linie II-II der Fig. 1,
- Fig. 3: eine erfindungsgemäße gesinterte Pleuelstange in einem vereinfachten Schaubild, in dem Bereiche mit einer unterschiedlichen Dauerbruchsicherheit eingezeichnet sind und
- Fig.4: einen Ausschnitt einer erfindungsgemäßen Pleuelstange in einem achsnormalen Schnitt durch den Pleuelstangenkopf im Bereich der Ölbohrung in einem größeren Maßstab, wobei wiederum Bereiche unterschiedlicher Dauerbruchsicherheit eingetragen sind.

### Bester Weg zur Ausführung der Erfindung

Die dargestellte Pleuelstange weist in herkömmlicher Weise ein Pleuelstangenauge 1 zum Einpressen eines Kolbenzapfens, einen Schaft 2 und einen Pleuelstangenkopf 3 am anderen Ende des Schaftes 2 auf. Der Schaft 2 wird durch zwei Längsstege 4 gebildet, die vom Pleuelstangenkopf 3 zum Pleuelstangenauge 1 hin divergieren und durch einen Verbindungssteg 5 versteift sind, um eine möglichst hohe Eigenfrequenz sicherzustellen.

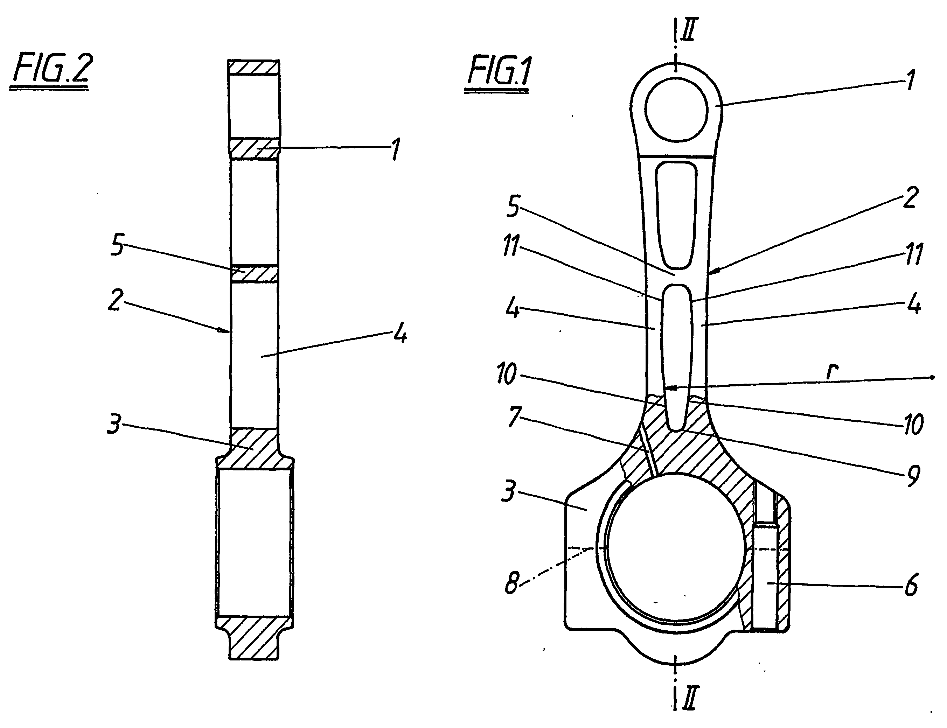

Zur Herstellung dieser Pleuelstange wird zunächst ein Formkörper aus einem geeigneten Sinterpulver warmgepreßt, bevor dieser Formkörper mit Bohrungen 6 für Lagerschrauben und mit einer Ölbohrung 7 versehen wird. Nach dem Sintern des Formkörpers kann der Pleuelstangenkopf 3 durch eine Bruchtrennung entlang einer in der Fig. 1 strichpunktiert angedeuteten Sollbruchfläche 8 geteilt werden, so daß für das vom Pleuelstangenkopf 3 aufzunehmende Kurbelzapfenlager ein entsprechender Lagerdeckel erhalten wird.

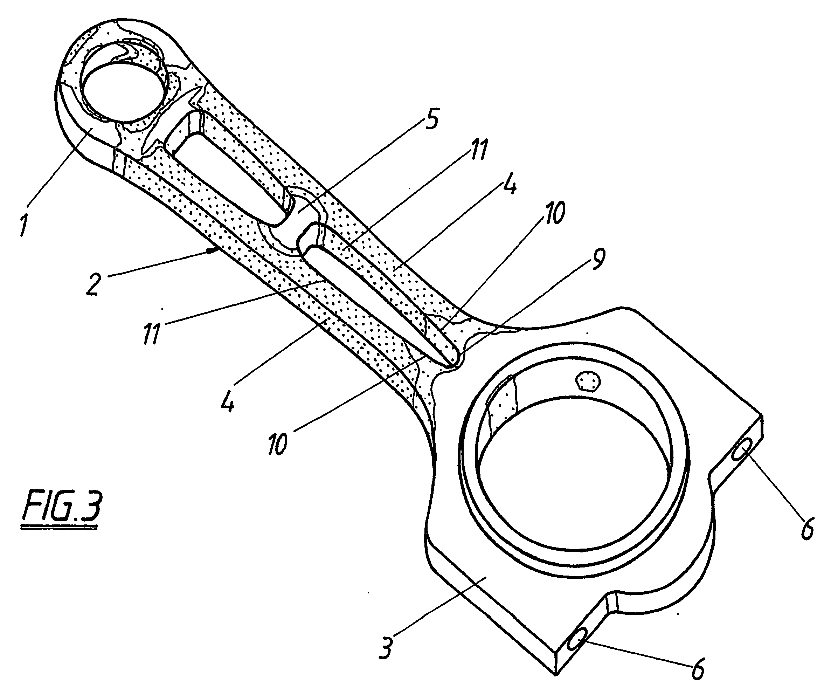

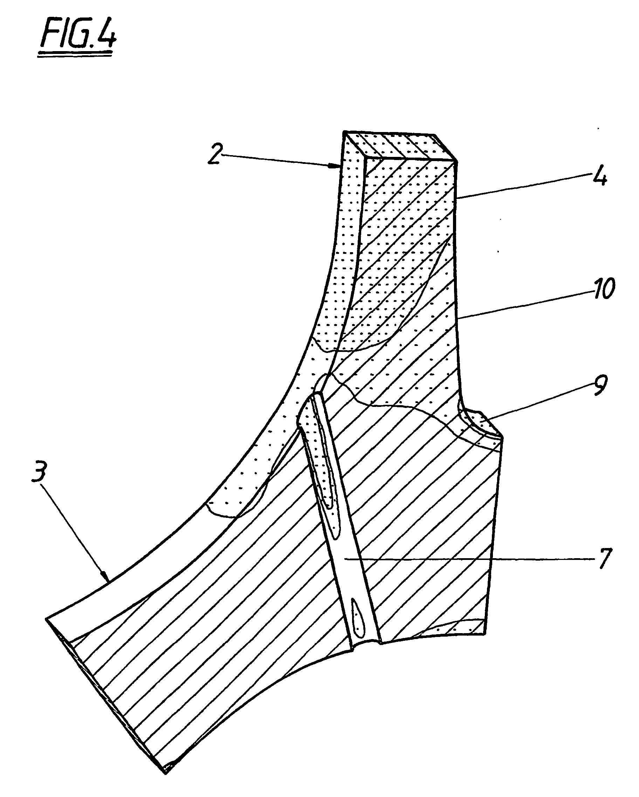

Aufgrund der dynamischen Beanspruchung von Pleuelstangen kommt der Dauerbruchsicherheit dieser Pleuelstangen eine besondere Bedeutung zu. Um die geringere Festigkeit gesinterter Pleuelstangen auszugleichen und die Schaftbreite im Übergangsbereich zum Pleuelstangenkopf 3 zu begrenzen, konvergieren die Längsstege 4 des Schaftes 2 gegen den Pleuelstangenkopf 3 hin. Die damit verbundenen Spannungsverlagerungen bei den auftretenden Druck-, Zug- und Biegebelastungen ergeben mit den jeweiligen Festigkeitseigenschaften der einzelnen Bereiche in diesen Bereichen unterschiedliche Dauerbruchsicherheiten, wie sie in den Fig. 3 und 4 nach entsprechenden Berechnungen angedeutet sind. Dabei zeigen die ungepunkteten Pleuelstangenbereiche eine Dauerbruchsicherheit größer als 3,5. Die geringfügig gepunkteten Bereiche weisen eine Dauerbruchsicherheit zwischen 2,5 und 3,5 und die dichter gepunkteten Bereiche eine Dauerbruchsicherheit zwischen 1,6 und 2,5 auf. Wie der Fig. 4 entnommen werden kann, liegt die Dauerbruchsicherheit im Bereich der Ölbohrung 7 über einen geforderten Wert von 1,6. Dies ist nur möglich, weil der Bereich der Ölbohrung 7 durch eine Spannungskonzentration im Mittenbereich zwischen den beiden Längsstegen 4 entlastet werden kann. Diese Spannungskonzentration wird durch die mittige Rundung 9 zwischen den Längsstegen 4 erreicht, die einen vergleichsweise kleinen Rundungsradius von beispielsweise 2,5 mm aufweist. Um solch eine Rundung 9 mit kleinem Durchmesser zwischen den Längsstegen 4 vorsehen zu können, ohne eine ungünstige Spannungsverteilung in den Längsstegen zu erhalten, geht die Rundung 9 über Anschlußkrümmungen 10 stetig in die einander zugekehrten Stegflanken 11 über, wobei der Krümmungsradius r dieser Anschlußkrümmungen 10 beispielsweise dem 50fachen Radius der Rundung 9 entspricht. In der Fig. 1 sind diese Größenverhältnisse angedeutet.

Im Bereich des Pleuelstangenauges 1 ergeben sich aufgrund der zu diesem Pleuelstangenauge 1 hin beispielsweise unter einem Winkel von 4° divergierenden Längsstege 4 ebenfalls günstige Spannungsverteilungen, die ein Einpressen des Kolbenzapfens erlauben. Die Dauerbruchsicherheiten liegen auch im Bereich des Pleuelstangenauges 1 oberhalb der zu fordernden Mindestwerte.

## Patentansprüche

1. Gesinterte Pleuelstange für eine Verbrennungskraftmaschine mit einem Pleuelstangenauge (1) zur Aufnahme eines Kolbenbolzens, mit einem Pleuelstangenkopf (3) zur Kurbelzapfenlagerung und mit einem Schaft (2) aus zwei divergierenden, gegebenenfalls durch einen Verbindungssteg (5) versteiften Längsstegen (4), deren einander zugekehrte Stegflanken (11) im Bereich des Pleuelstangenkopfes (3) durch eine mittige, konkave Rundung (9) verbunden sind, **dadurch gekennzeichnet, daß** die Längsstege (4) des Schaftes (2) mit ihren Innen- und Aüßenseiten vom Pleuelstangenkopf (3) zum Pleuelstangenauge (1) divergieren.

2. Pleuelstange nach Anspruch 1, **dadurch gekennzeichnet, daß** die Stegflanken (11) und die mittige Rundung (9) über Anschlußrundungen (10) ineinander übergehen, deren Achsen jeweils auf der Seite des gegenüberliegenden Längssteges (4) außerhalb des Schaftes (2) liegen.

3. Pleuelstange nach Anspruch 1 oder 2, **dadurch gekennzeichnet, daß** die Krümmungsradien (r) der Anschlußrundungen (10) wenigstens dem zehnfachen, vorzugsweise mindestens dem zwanzigfachen Radius der mittigen Rundung (9) entsprechen.

4. Pleuelstange nach einem der Ansprüche 1 bis 3, **dadurch gekennzeichnet, daß** die beiden Längsstege (4) des Schaftes (2) unter einem Mindestwinkel von 2° divergieren.

## Claims

1. Sintered connecting rod for an internal combustion engine with a connecting rod little end (1) for receiving a gudgeon pin, with a connecting rod big end (3) for mounting on a crankpin and with a shaft (2) comprising two diverging longitudinal webs (4) optionally reinforced by a connecting web (5), the facing web flanks (11) of said longitudinal webs (4) being connected in the region of the of the connecting rod big end (3) by means of a central, concave rounded area (9), **characterised in that** the longitudinal webs (4) of the shaft (2) with their inner and outer sides diverge from the connecting rod big end (3) to the connecting rod little end (1).

2. Connecting rod according to claim 1, **characterised in that** the web flanks (11) and the central rounded area (9) go into each other through rounded connection areas (10) whose axes lie on the side of the opposing longitudinal web (4) outside of the shaft (2).

3. Connecting rod according to claim 1 or 2, **characterised in that** the radii of curvature (r) of the rounded connection areas (10) correspond to at least ten times, preferably at least twenty times, the radius of the central rounded area (9).

4. Connecting rod according to one of the claims 1 to 3, **characterised in that** the two longitudinal webs (4) of the shaft (2) diverge at a minimum angle of 2°.

## Revendications

1. Bielle frittée pour un moteur à combustion interne, avec un oeillet de bielle (1), devant recevoir un boulon de piston, avec une tête de bielle (3), pour fournir le montage en palier du maneton de vilebrequin, et avec une tige (2) formée de deux nervures longitudinales (4) divergentes, le cas échéant rigidifié par une nervure de liaison (5), dont des flancs de nervures (11), tournés l'un vers l'autre, sont reliés, dans la zone de la tête de bielle (3), par un arrondi (9) central concave, **caractérisée en ce que** les nervures longitudinales (4) de la tige (2) divergent, par leurs faces intérieures et extérieures, en allant de la tête de bielle (3) vers l'oeillet de bielle (1).

2. Bielle selon la revendication 1, **caractérisée en ce que** les flancs de nervure (11) et l'arrondi central (9) se transforment l'un en l'autre, par des arrondis de raccordement (10), dont les axes sont chacun situés sur un côté de la nervure longitudinale (4) opposée, à l'extérieur de la tige (2).

3. Bielle selon la revendication 1 ou 2, **caractérisé en ce que** les rayons de courbure (r) des arrondis de raccordement (10) correspondent au moins à dix fois, de préférence à au moins vingt fois, le rayon de l'arrondi central (9).

4. Bielle selon l'une des revendications 1 à 3, caracérisé en ce que les deux nervures longitudinales (4) de la tige (2) divergent d'une valeur inférieure à un angle minimal de 2°.
